# EUROPEAN PATENT SPECIFICATION

(11) **EP 3 486 618 B1**
(45) Date of publication and mention of the grant of the patent: **15.03.2023**
(21) Application number: 18190076.2
(22) Date of filing: 17.04.2009
(51) Int. Cl.: G01F 3/08, B29L 31/34, B29C 65/20, B29C 65/00, G01F 15/14

(54) **HOUSING FOR A FLUID FLOW METER**
GEHÄUSE FÜR EINEN FLUIDSTRÖMUNGSMESSER
BOÎTIER POUR DÉBITMÈTRE DE FLUIDE

(30) Priority: 18.04.2008 GB 0807147
(43) Date of publication of application: 22.05.2019
(62) Divisional of application: 09732296.0
(73) Proprietor: Elster Water Metering Limited, Birmingham B4 6AT (GB)
(72) Inventor: GABRIEL, Timothy, Luton LU3 3AN (GB); MAY, Martin, Luton LU3 3AN (GB)
(74) Representative: Houghton, Mark Phillip

(56) References cited:
- EP-A2- 1 857 784
- DE-A1- 10 238 416
- DE-A1- 19 950 512
- GB-A- 2 307 440
- US-A- 4 679 442
- US-B1- 6 487 919

## Description

This invention relates to fluid flow meters, such as mechanical or electromagnetic, fluid oscillator or ultrasonic flow meters, and to a method of manufacturing same. By "mechanical" we mean a flow meter which has a moving part, the movement of which is utilised as a measure of the flow. The moving part may be a rotor which in the case of a volumetric flow meter successively transfers defined volumes of fluid from an inlet to an outlet. The rotation of the rotor thus is directly proportional to the volume of fluid passing through the meter. The invention has particular relevance to precision measuring devices (whether or not they contain moving parts) held within a pressure vessel.

Volumetric flow meters are supplied in large numbers for water metering applications, particularly for domestic consumers. It thus is important that the unit cost of such meters is kept low, that they are reliable throughout their long service lives, and that they are non-polluting.

The preferred embodiments of the invention seek to address these requirements.

Relevant disclosures of fluid flowmeters comprising a casing and measuring means are disclosed in US 648 7919 which provides a two part casing friction welded together with a separate turbine suspended within the casing and DE10238416 which discloses a casing, housing and measuring means in which the casing is held together by means of a locking ring. The present invention in its various aspects is as set out in the appended claims.

The invention provides a fluid flow meter as defined in claim 1.

The term "permanently" preferably includes any form of permanent bond (or connection), and in particular connotes an irreversible bond (or connection), for example welding. The connection preferably includes connections such as bolting, screwing or riveting.

Preferably, the mechanical flow measuring means comprises at least one of a piston, a rotor and a vane.

According to the invention, the casing part bears upon the measuring means to seal it against means defining a flow path between the measuring means and at least one of said flow connections.

Preferably, the measuring means comprises a rotor, rotation of which is indicative of the flow, and means for communicating said rotation or a measurement thereof non-mechanically to a register means. More preferably, the rotation or a measurement thereof is communicated via one of a magnetic coupling, a mechanical coupling, or an inductive coupling.

Preferably, the rotor is disposed in a chamber, the chamber having an opening in an end face thereof, the defining means sealing against said end face.

According to the invention, the flow measuring means includes a housing for the flow measuring means, said housing being in at least two parts, and disposed in the outer casing; said outer casing bears on each said part of said housing, and the at least two parts of the outer casing, by being permanently bonded together, both enclose said housing and seal said at least two parts of the housing together.

Preferably, each of said at least two outer casing parts includes at least one formation to bear on a respective one of said at least two housing parts. More preferably, each said at least one formation is a protrusion or a slender web.

Preferably, the formation comprises at least 3, more preferably 5, slender webs.

Preferably, the formation is substantially annular.

Preferably, at least one of said formations is so formed as to both bear on, and positionally locate, said measuring means.

Preferably, by bearing on said at least two housing parts said outer casing applies a compression force on such housing parts, and said compression force is borne as a tension force acting through said bond.

Preferably, said formation on a first outer casing part has a corresponding formation on a second outer casing part, such that such pair of formations bears on said housing parts without generating a moment of the bearing force on the housing.

Preferably, each said housing part comprises a flange portion, each said flange portion cooperating with the other, and said casing parts bear on said flange portions.

According to the invention, said outer casing parts bear on said measuring means to form a sealable flow path from an inlet, through the measuring means, to an outlet of the flow meter.

Preferably, said outer casing parts bear on said measuring means to seal said measuring means against the outer casing to resist flow leakage past the measuring means.

Preferably, said at least two outer casing parts are permanently bonded together around their edges.

Preferably, said at least two outer casing parts form a sealable vessel to enclose the measuring means.

Preferably, one said outer casing part is a container for receiving the measuring means and a second said outer casing part closes the container to form a sealable vessel. More preferably, the container is cup-shaped and the second outer casing part forms a lid therefore, and/or the second outer casing part is a pressure plate as herein defined.

Preferably, the bonded together casing parts positionally locate the measuring means within the casing.

Preferably, the bond is formed of the same material as said outer casing.

According to the invention, the at least two outer casing parts are hot-plate welded together.

Preferably, the material in the region of the bond is positioned generally exterior to the interior surface of the at least one outer casing part.

Preferably, the material in the region of the bond is positioned generally interior to the exterior surface of the at least one outer casing part, and is preferably at least partly concealed by the at least one outer casing part.

Preferably, the material in the region of the bond extends into a cavity in the at least one outer casing part.

Preferably, said flow connections are manifold connections.

Preferably, the meter further comprises a register means disposed outside the casing for recording, displaying, processing or transmitting an output from the measuring means. According to a further aspect of the present invention there is provided a kit of parts for use in manufacturing a flow meter according to any of the preceding claims.

In a third aspect, the invention provides a method of manufacturing a flow meter as defined in claim 8.

Apparatus and method features may be interchanged as appropriate, and may be provided independently one of another. Any feature in one aspect of the invention may be applied to other aspects of the invention, in any appropriate combination. In particular, method aspects may be applied to apparatus aspects, and vice versa.

The invention will be described, merely by way of example, with reference to the accompanying drawings, wherein:
Figure 1 is an exploded view of a conventional volumetric water meter;
Figure 2 is an exploded view of a meter according to the invention;
Figure 3 is a section through an assembled meter as shown in Figure 2 ;
Figure 4 is a section through an alternative version of a meter according to the present invention;
Figure 5 is an enlarged view of the bond area of a meter as shown in Figure 4 ;
Figure 6 is an isometric view of a pressure plate according to the present invention;
Figure 7 is an isometric view of an outer casing part according to the present invention;
Figure 8 is a section through an alternative version of the meter according to the present invention, showing the fluid flow path through the meter;
Figure 9 is an enlarged view of the bond area of a meter as shown in Figure 8;
Figure 10 is an isometric view of an outer casing part of a meter as shown in Figure 8;
Figure 11 is an alternative section through a meter as shown in Figure 8;
Figure 12 is enlarged view of the bond area of a meter as shown in Figure 11; and
Figure 13 diagrammatically illustrates a method according to the invention.

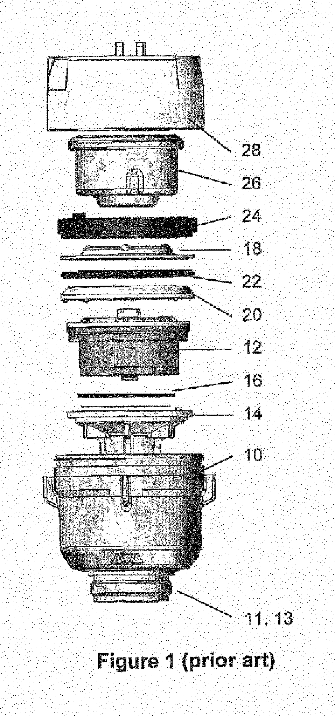

Referring to figure 1, this conventional meter is shown in order to demonstrate the simplification achievable by means of the present invention.

The meter comprises a cup-shaped brass body or casing 10 which has concentric inlet and outlet manifold connections in its base for connecting the meter to a standard manifold fitting. The casing contains a measuring chamber assembly 12 to which flow passages are defined by an adaptor 14 to the outer (inlet) manifold connection 11 and the inner (outlet) manifold connection 13.

A seal is provided by an O-ring 16 between the measuring chamber assembly 12 and the adaptor 14 to avoid a leakage between the inlet and outlet passages.

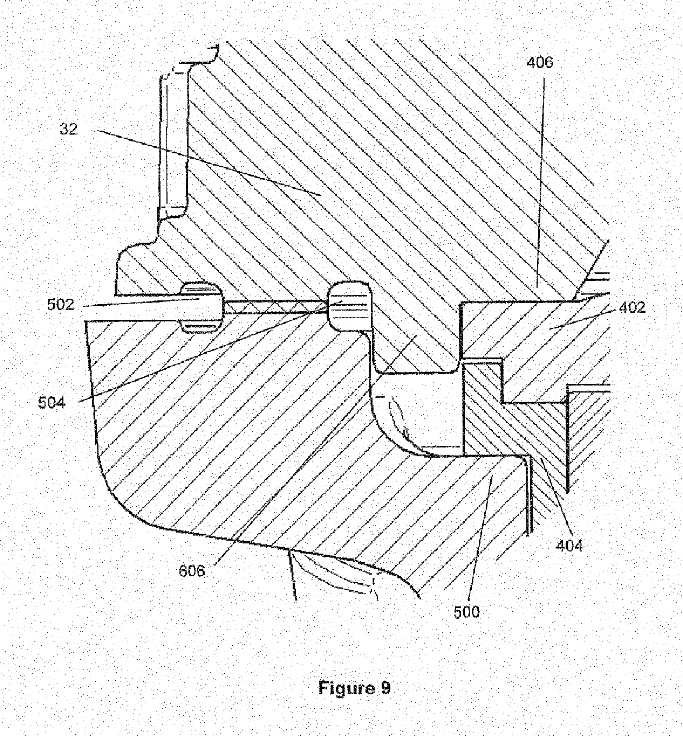

The canister 12 and a rotor contained within it are similar to those described in our earlier specification WO94/07111, to which the reader is referred. Indeed the meter of figure 1 is generally very similar to the one illustrated in figure 9 of the earlier specification, except that the latter has in-line rather than manifold connections.

The chamber 12 is located in the casing 10 by a stainless steel pressure plate 18 which bears upon the top of the chamber 12 via a spacer ring 20 and O- ring 22. A polymer screw ring 24 threadedly engages the top of the casing 10 to load the pressure plate 18, spacer 20, chamber 12 and adaptor 14 axially against the casing 10 to maintain their relative dispositions and in particular to maintain the integrity of the O-ring seals 16, 22.

A register 26 such as described in our earlier specification (GB 2422933-A) is provided above the pressure plate to sense and record rotation of the rotor, and is protected from the environment by a cover or shroud 28.

The casing 10 is a casting machined where necessary to provide complementary threads and in the case of the casing 10 also to provide mating surfaces for the adaptor 14 and the external manifold connector 11, 13. The pressure plate 18 is a stamping.

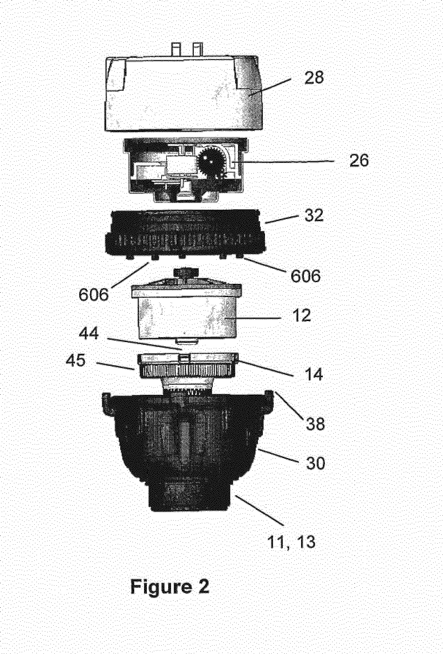

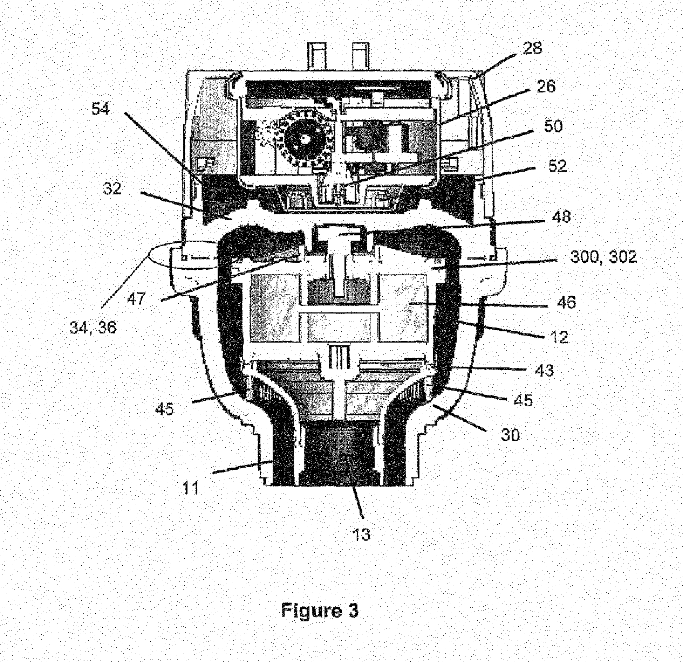

Referring to figure 2, the simplification achieved by the present invention is evident. Corresponding parts which are unchanged in function have the same reference numerals throughout. The casing 30, instead of being a machined brass casting, is an injection moulded plastics component of a thermoplastic material, such as Acetyl, Nylon or Polyphenylene Sulfide (PPS) based plastics material. It generally requires no machining (except for example for machining feeds and the like), and is used essentially in its as-moulded condition. The prior art steel pressure plate 18, the spacer 20, the seal 22 and the screw ring 24 are replaced by a single pressure plate component 32 which performs the function of all four. The pressure plate 32 is of the same plastics material as the casing 30, and is permanently hot-plate welded to it as described hereafter around facing edge surfaces (weld surfaces) 34, 36 of the two components as shown in figure 3.

The rotor 46 within the chamber 12 is coupled via its mounting spindle to a two-pole magnet 48. This magnet forms a magnetic coupling with a further magnet 50 mounted on an input drive spindle of the register within the canister containing the register 26; a mild steel ring 52 prevents tampering with the register by shielding it from external magnetic fields. Alternatively, the rotor 46 is coupled to the input drive spindle of the register mechanically or inductively.

The shroud 28 is a snap-fit on an upstanding flange 54 of the pressure plate and is fitted with a tamper-evident seal to prevent interference with the register.

The surface 34 of the casing 30 has four upstanding lugs 38 which may be used during installation of the flow meter. The pressure plate 32 has a number of downwardly-depending formations 606 which bear on the measuring chamber housing 12. The formations locate the housing 12 radially within the outer casing, and act to compress the housing parts, and seal them together. In addition, the formations 606 locate the housing radially within the outer casing. The compression force applied to the housing parts 402, 404 is borne by a tensile force acting through the weld.

The weld surfaces 34, 36 are softened during the hot-plate welding step and when the pressure plate 32 is compressed onto the casing 30 are spread to form a continuous pressure-tight weld between those surfaces 34, 36. The annular bonding enables the casing to be rigid, and prevents distortion that otherwise might occur if mechanical fixing means were used. Once welded together the outer casing parts form a sealable vessel, and once installed in situ the meter forms a sealed fluid path from the inlet to the outlet.

The compression step is carefully controlled so that the pressure plate 32 and the casing 30 are correctly positioned axially relative to each other, and the aforementioned formations 406 bear to the correct extent on flanges 300, 302 of the chamber 12 to load it and the adaptor 14 axially against the casing 30. Applying a clamping force to the chamber flanges assists in creating a watertight seal, without distorting the chamber or the measuring mechanism. The clamping force applied to the chamber is controlled to be neither too high that the chamber is distorted, nor too low that the chamber leaks when containing liquids under high pressure, such as 15 or 16 bar, or 25 bar, or even 50 bar (5 x 10⁶ N/m²). The chamber 12 is located axially and radially on the adaptor 14 by four lugs 43 which engage conforming recesses 44 in the top of the adaptor. The adaptor 14 has a downwardly extending annular flange 45 which contacts the lower internal surface of the casing 30. Thus the assembly of the pressure plate 32, chamber 12, adaptor 14 and casing 30 are accurately clamped together.

In the initial testing stages prior to mass-production, the correct clamping force is determined empirically. First, the variation in flow meter efficiency with increasing clamping force applied to the annular flange of the flow meter chamber is determined experimentally. Additionally, the variation of the clamping force applied to the chamber with increasing force used in the hot-plate welding process may be determined, to allow an optimal force to be used during mass manufacture. The expected deflections of the casing may also be calculated, using a technique such as finite element modelling, to determine the expected clamping force when the hot-plate welding force is removed, and/or to determine the required strength of the assembly. These values, and in particular the efficiency values, are later used to optimise the welding process to obtain the optimal efficiency of the flow meter (as described further in the second step below).

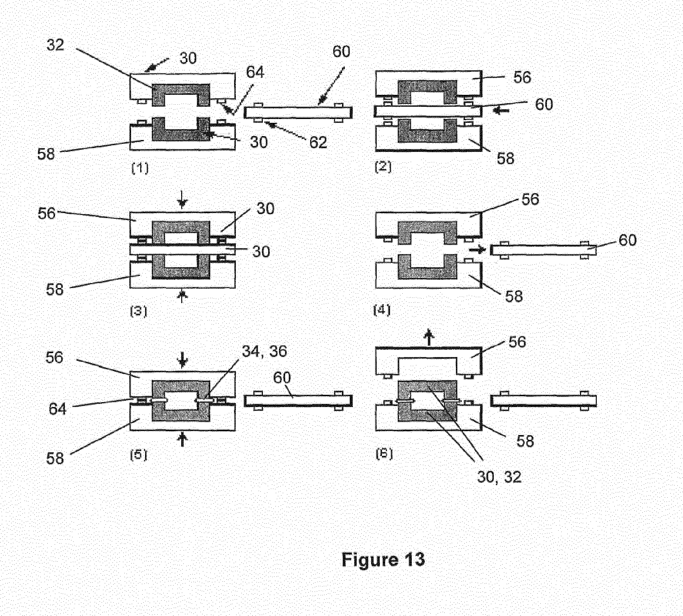

Secondly, and again during the initial testing stages, given that the hot-plate weld strength is dependent on the force applied during the welding process, the force applied during the hot weld process itself is optimised for both weld strength and flow meter performance. This is accomplished by varying and thus optimising the parameters of the hot-plate weld process, such as: the weld temperature; casing material; formation 601, 602 size; and weld stop position. These parameters will be discussed in further detail below with reference to Figure 13. Once the optimal parameters are found they are used in the mass-manufacturing process, and in this way a very robust process can be developed that can produce consistently accurate flow meters.

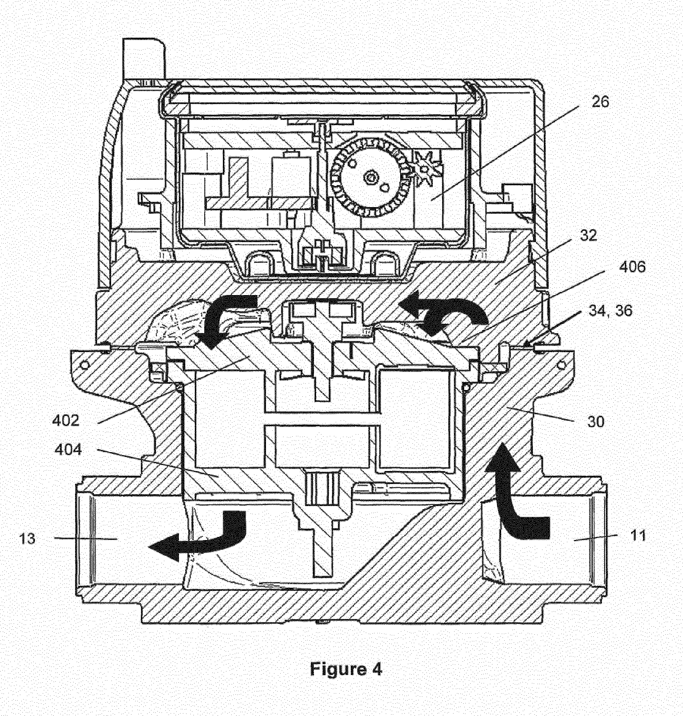

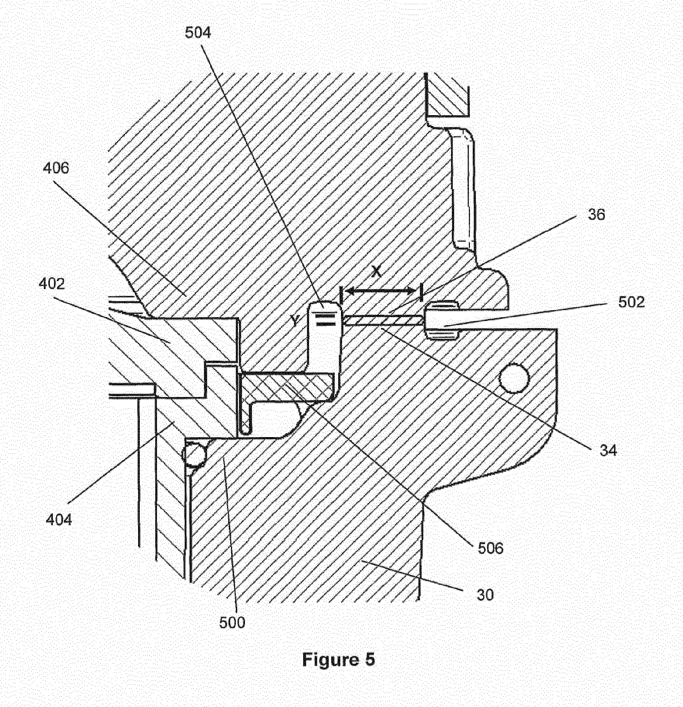

Figure 4 shows a section through an alternative version of a meter, with radial fluid flow as opposed to axial fluid flow. The arrows designate the direction of fluid flow through the meter; not all of the internal flow passages are visible in this particular section. The two parts of the measuring chamber housing 402, 404 are positioned within the outer casing 30, 32 using web formations 406. As described above, the web formations 406 are used to bear on the flanged portions of the housing parts 402, 404 to seal the two portions together. An enlarged view of the weld area between the two parts of the outer casing can be seen in Figure 5. The web formation 406 can be seen bearing on the flanged portion of the housing part 402, and a corresponding formation 500 bears on the flanged portion of the second housing part 404. In this embodiment, the corresponding formation 500 is in the form of an annulus that bears directly on the flanged portion of the housing part 404, around its entire perimeter. This allows the housing parts to be sealed together without distortion. In an alternative embodiment both of the web formations 406 and 500 are annuli adapted to act on the entire flange of the chamber housing.

Figure 5 also shows the cavities 502, 504 where the excess weld material flows during the hot-plate welding process. The cavities 502, 504 prevent the excess weld from being seen in the case of the external cavity, and from impinging on the fluid flow in the case of the internal cavity. In addition, Figure 5 shows a strainer 506 used to prevent debris fouling the measuring chamber. The strainer is located within the outer casing using an extension of the web formation 406.

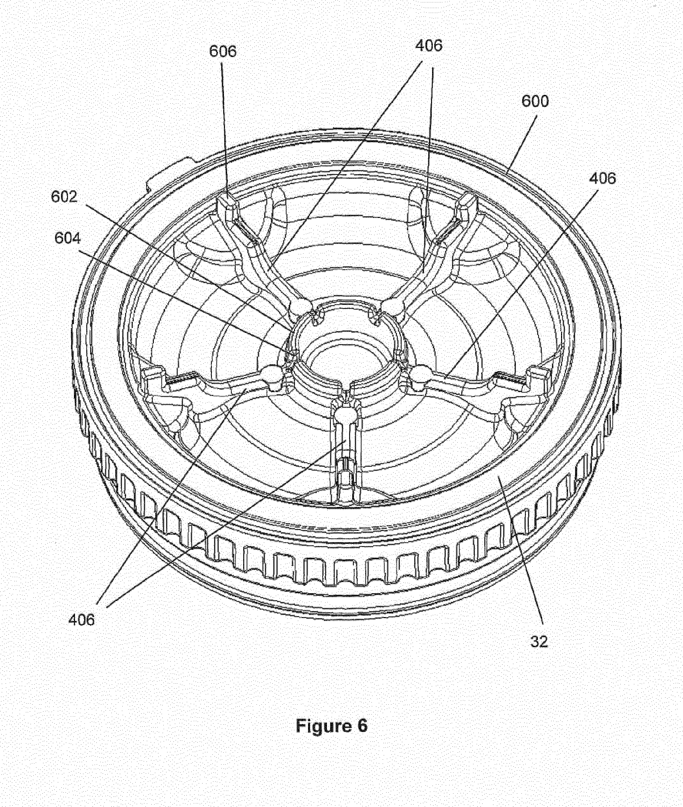

Figure 6 shows a detailed isometric view of a version of the pressure plate 32. In particular, the web formations 406 can be seen extending radially from the formation 602 of the pressure plate 32. The web formations 406 have filleted upstanding protrusions 606 that act to locate the chamber housing 12 (not shown) radially, and flat portions adjacent the upstanding protrusions to bear on the chamber housing 12 to create a seal between the two housing parts 402, 404 (not shown). The centre annulus 602 has notches 604, and is used to prevent the fluid flow directly impinging on the spindle 48. In addition, the centre annulus 602 is used as a strengthening member, given that the pressure plate 32 is thinnest in this region to allow the rotor magnet to communicate with the corresponding magnets in the register. The notches 604 aid in allowing trapped air and particulate matter to escape the void created by the annulus 602 when the flow meter is connected to the fluid flow.

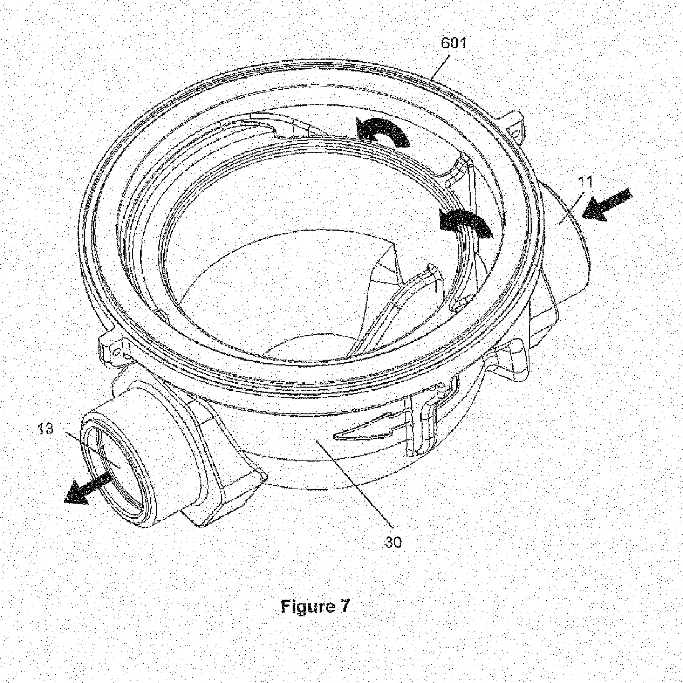

Figure 7 shows an isometric view of a version of the meter body 30. The inlet 11 and outlet 13 are shown, together with the fluid flow path (indicated by the arrows). In addition, an annular sacrificial layer 601 can be seen on the weld surface 36.

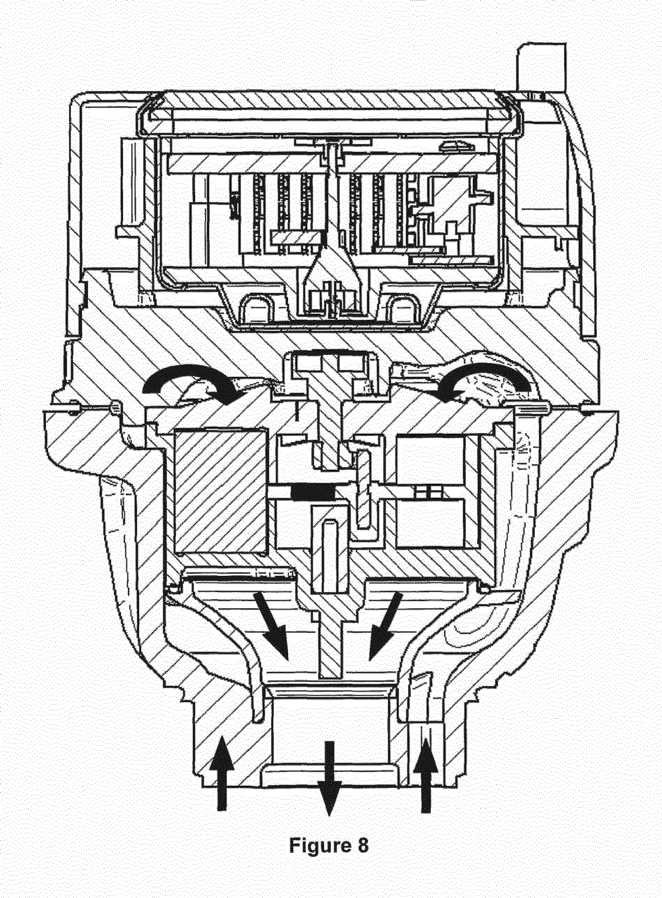

Figure 8 is an alternative version of the meter shown in Figures 2 and 3, and shows the fluid flow through the meter.

Figure 9 is an enlarged view of the bonding region of the meter shown in Figure 8. This figure shows the web formation 406 bearing on the flanged portion of the housing part 402, and the respective web formation 500 bearing on the flanged portion of the housing part 404. The cavities 502, 504 to receive the excess weld material during the hot-plate weld process are as described above.

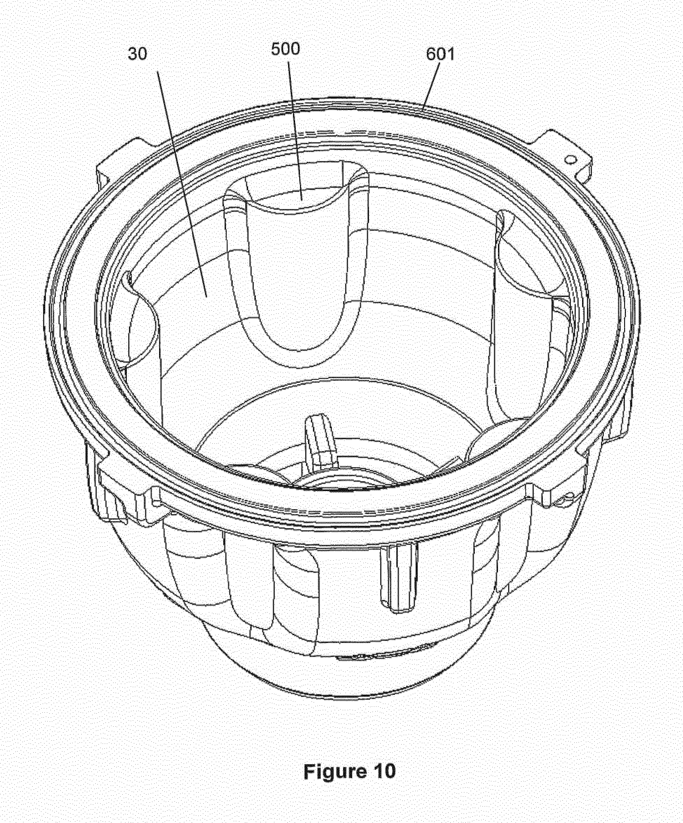

Figure 10 shows an isometric view of the body in an alternative version of the meter shown in Figures 2 and 3. The formations 500 that bear on the housing part 404 (not shown) are in the form of indentations in the main body. In this embodiment, each web formation 406 has a respective corresponding formation 500 that is located directly beneath and in line with it. This allows the housing parts to be sealed together without distortion.

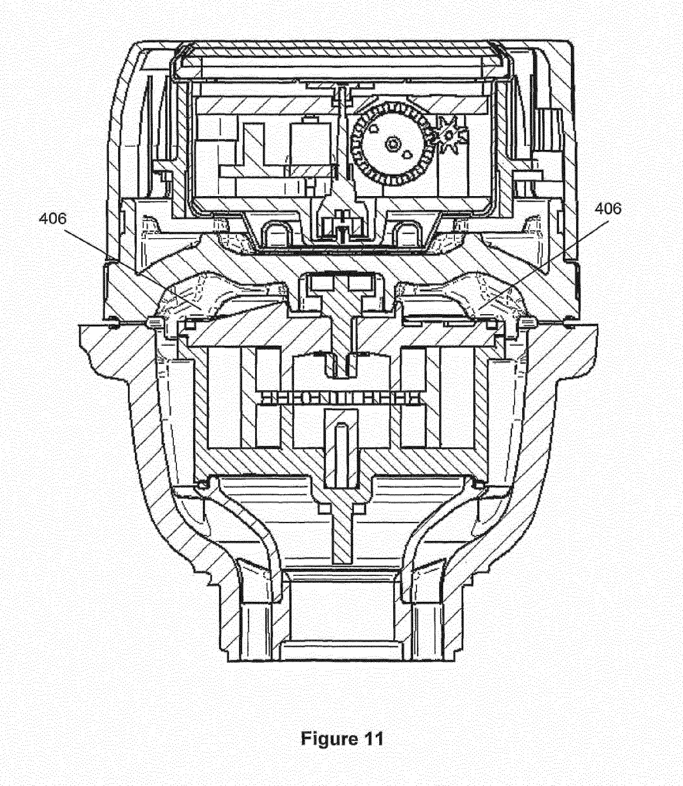

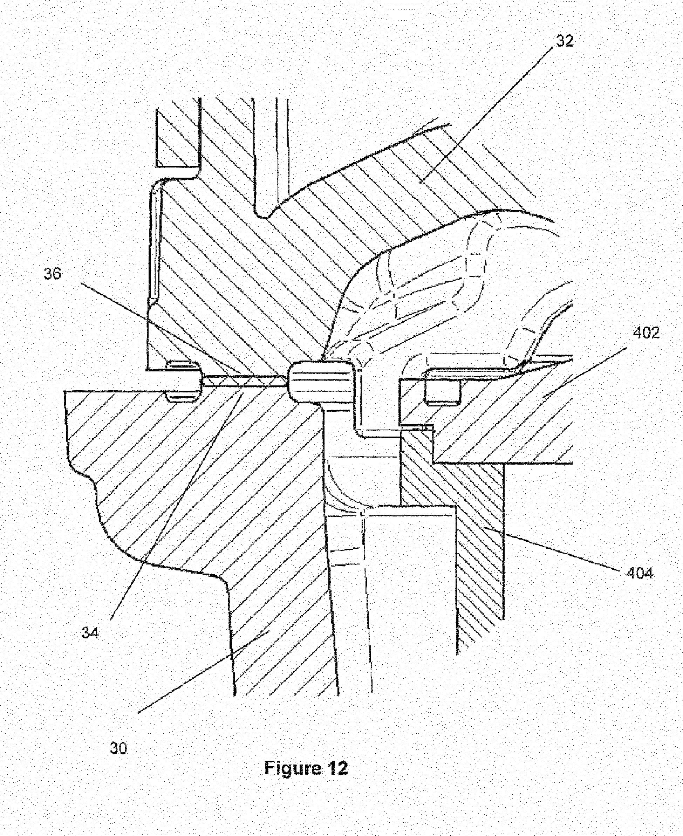

Figures 11 and 12 show an alternative section through a meter as shown in Figure 8, and the corresponding enlarged view of the bond area. The features shown are as described above.

Hot-plate welding is known *per se.* However, hot-plate welding has not been applied, for example, to the present technique of sealing the outer casing, and simultaneously sealing the internal measuring chamber. The technique as so applied is described with reference to figure 13, which is based on material available on the website of TWI Limited (www.twi.co.uk).

In general terms, the kit of parts including the outer casing parts, measuring chamber housing parts (and associated mechanisms), and various inserts are brought together in the hot-plate welding process, and once the register is snapped in place the finished product is complete.

In more detail, in the first stage (1) of the process the casing 30 and the pressure plate 32 (shown diagrammatically) are placed in upper and lower holding fixtures 56, 58. The chamber 12 and adaptor 14 (not shown) are placed in position inside the casing 30. In the second stage (2) a heating plate 60 is inserted between the upper and lower fixtures. The plate typically has an internal electrical heating element and is coated with PTFE so that molten plastics material will not adhere to it. Although not illustrated, the plate 60 in practice is shaped to clear the top of the chamber 12. Indeed the plates conveniently can be annular.

In the third stage (3) the upper and lower fixtures are closed to press the circumferential faces 34, 36 of the casing and the pressure plate against the hot plate, to soften them. Melt stops 62 and weld stops 64 on the hot plate and the fixtures together limit the compression of the pressure plate and casing. In the fourth stage (4) the fixtures 56, 58 are opened, and the heating plates 60 is withdrawn. In the fifth stage (5), the fixtures are brought together to an extent limited by the weld stops 64 to compress the faces 34, 36 of the casing and pressure plate together, and to spread the formations 600, 601 and form a continuous pressure-tight welded joint between the faces 34, 36. During this stage of the operation the webs formations 406 of the pressure plate are brought into contact with the chamber 12 to load it and the adaptor 14 against the casing 30 so that together they provide a leak-proof fluid flow path from the manifold inlet 11 (figure 3), through the adaptor to the chamber, through the chamber and back through the adaptor to the manifold outlet 13. Thus, in a single process the flow meter casing, and the outer casing are sealed.

The weld stops 64 enable this assembly step to be achieved with precision and repeatably from meter to meter during production. Finally, in stage (6) the fixtures are opened, and the new assembled meter is removed and sent to have its register 26 and shroud 28 fitted.

The configuration of the layers of plastic material on the annular flange, shown as formations 600, 601, and sacrificed in the hot-plate welding process, is important. The sacrificial layers are heated by the hot-plate, and then used to permanently weld the two parts of the outer casing together. In order to ensure that the weld is of sufficient strength, but does not extend beyond the weld area, the width and height of the layer is controlled accurately. As can be seen in Figure 5, the sacrificial layers 600, 601 have a width X, and a height Y; the width of the sacrificial layers will generally be less than the wall thickness of the casing. For example, if the casing wall thickness is 5mm, the width X might be 2mm, and the height Y might be 1 mm. The sides of the sacrificial layers are sloped to aid in the welding process. In addition, the area surrounding the layers 600, 601 is adapted to allow the layers to extrude between the two parts of the casing without intruding inwardly into the main volume of the casing, and without extruding outwardly past the edges of the casing. This is accomplished using internal and external cavities 502, 504 to accept the weld bead.

The use of the invention as specifically described brings a number of advantages:
- reduced material cost compared to brass;
- no need for a machined threaded connection between the pressure plate 32 and the casing 30;
- the welded joint 34, 36 acts as a pressure seal, avoiding the need for an O-ring between the pressure plate and the casing;
- there is better control of the assembly and clamping of the chamber 12 and adaptor 14, avoiding the need for an O-ring between them;
- because the pressure plate 32 is not rotated during assembly there is no risk that the chamber 12 may become twisted, as sometimes happens during assembly of a conventional meter;
- the parts of the components 30, 32 adjacent the welded joint are substantially unstressed, unlike the threaded parts forming the mechanical joint in a conventional meter;
- the fixing of the pressure plate in a conventional meter lacks rigidity due to the presence of the O-ring. Here the fixing is encastre due to the welded joint, and a more rigid structure results; and
- the meter can be made almost entirely of plastics, and thus can more easily be made compliant with the EU Water Quality Directive, and is readily recyclable at the end of its life.

If preferred, the chamber 12 and adaptor 14 may be inserted into the casing 30 at the fourth stage rather than the first stage of the welding process shown in figure 13 .

Although described in the context of a volumetric (positive displacement) water meter, the invention may also be applied to other mechanical meters.

Also other forms of register may be used, for example ones providing telemetry or other remote reading instead of or in addition to a local display, or an electronic rather than mechanical display. Instantaneous flow rather than total flow (integrated) outputs also can be provided for process control applications.

## Claims

1. A fluid flow meter comprising an outer casing having an inlet and an outlet (11, 13) adapted to be connected so that in operation fluid to be measured flows through the casing, and mechanical flow measuring means enclosed in a housing (12), the housing being in two parts (402, 404) and being disposed in the casing to measure said flow through the casing, the casing being of plastics material and in at least two parts (30, 32), each part of the casing having an annular flange supporting a layer of plastic material (600, 601), the at least two parts (30, 32) of the casing being-permanently bonded together by the two plastic material layers being sacrificed in a hot-plate welding process, the at least two parts (30, 32) of the casing being bonded to enclose and bear down on the measuring means, wherein said casing bears on each said part (402, 404) of said housing (12) of the measuring means to seal said at least two parts (402, 404) of said housing (12) together thereby forming a sealable flow path from the inlet (11), through the measuring means, to the outlet (13) of the flow meter.

2. A meter according to any of the preceding claims, wherein said at least two outer casing parts (30, 32) are permanently bonded or connected together around their edges.

3. A meter according to any of the preceding claims, wherein one said outer casing part (30) is a container for receiving the measuring means and a second said outer casing part (32) closes the container to form a sealable vessel.

4. A meter according to any of the preceding claims, wherein the bonded or connected together casing parts (30, 32) positionally locate the measuring means within the casing.

5. A meter according to any of the preceding claims, wherein the bond or connection is formed of the same material as said outer casing

6. A meter according to any of the preceding claims, wherein the at least two outer casing parts (30, 32) are welded together.

7. A meter according to any of the preceding claims, wherein the material in the region of the bond or connection extends into a cavity in the at least one outer casing part (30, 32).

8. A method of manufacturing a flow meter of any preceding claim comprising: compressing the outer casing parts together such that the outer casing bears on each part of the housing, and permanently bonding together said at least two parts of the outer casing both to enclose said housing, and to seal said at least two parts of the housing together.

## Patentansprüche

1. Fluidströmungsmesser, der eine äußere Ummantelung umfasst, die einen Einlass und einen Auslass (11, 13) aufweist, die dazu angepasst sind, derart verbunden zu sein, dass beim Betrieb Fluid, das gemessen werden soll, durch die Ummantelung strömt, und mechanische Strömungsmessmittel, die in einem Gehäuse (12) umschlossen sind, wobei das Gehäuse aus zwei Teilen (402, 404) besteht und in der Ummantelung angeordnet ist, um die Strömung durch die Ummantelung zu messen, wobei die Ummantelung aus Kunststoffmaterial und aus mindestens zwei Teilen (30, 32) besteht, wobei jedes Teil der Ummantelung einen Ringflansch aufweist, der eine Schicht aus Kunststoffmaterial (600, 601) trägt, wobei die mindestens zwei Teile (30, 32) der Ummantelung dauerhaft aneinander gebunden sind, indem die zwei Kunststoffmaterialschichten bei einem Heißplatten-Schweißprozess geopfert werden, wobei die mindestens zwei Teile (30, 32) der Ummantelung aneinander gebunden werden, um die Messmittel zu umschließen und auf diesen aufzuliegen, wobei die Ummantelung auf jedem Teil (402, 404) des Gehäuses (12) der Messmittel aufliegt, um die mindestens zwei Teile (402, 404) des Gehäuses (12) aneinander abzudichten, wodurch ein abdichtbarer Strömungsweg von dem Einlass (11) durch die Messmittel zu dem Auslass (13) des Strömungsmessers gebildet wird.

2. Messer nach einem der vorstehenden Ansprüche, wobei die mindestens zwei äußeren Ummantelungsteile (30, 32) um ihre Ränder dauerhaft aneinander gebunden oder verbunden sind.

3. Messer nach einem der vorstehenden Ansprüche, wobei ein äußeres Ummantelungsteil (30) ein Behälter zum Aufnehmen der Messmittel ist, und ein zweites äußeres Ummantelungsteil (32) den Behälter schließt, um ein abdichtbares Gefäß zu bilden.

4. Messer nach einem der vorstehenden Ansprüche, wobei die aneinander gebundenen oder verbundenen Ummantelungsteile (30, 32) die Messmittel innerhalb der Ummantelung positionsmäßig lokalisieren.

5. Messer nach einem der vorstehenden Ansprüche, wobei die Bindung oder Verbindung aus demselben Material wie die äußere Ummantelung gebildet ist.

6. Messer nach einem der vorstehenden Ansprüche, wobei die mindestens zwei äußeren Ummantelungsteile (30, 32) zusammengeschweißt sind.

7. Messer nach einem der vorstehenden Ansprüche, wobei das Material in dem Bereich der Bindung oder Verbindung in einen Hohlraum in das mindestens eine äußere Ummantelungsteil (30, 32) reicht.

8. Verfahren zum Herstellen eines Strömungsmessers nach einem vorstehenden Anspruch, umfassend: Komprimieren der äußeren Ummantelungsteile derart, dass die äußere Ummantelung auf jedem Teil des Gehäuses aufliegt, und dauerhaftes Binden der mindestens zwei Teile der äußeren Ummantelung, um sowohl das Gehäuse zu umschließen als auch die mindestens zwei Teile des Gehäuses aneinander abzudichten.

## Revendications

1. Débitmètre de fluide comprenant un boîtier externe comportant une entrée et une sortie (11, 13) conçues pour être raccordées pour qu'en cours de fonctionnement, du fluide à mesurer traverse le boîtier en s'écoulant et un moyen mécanique de mesure de débit contenu dans un logement (12), le logement étant en deux parties (402, 404) et étant disposé dans le boîtier pour mesurer ledit débit à travers le boîtier, le boîtier étant en matière plastique et en au moins deux parties (30, 32), chaque partie du boîtier comportant une bride annulaire soutenant une couche de matière plastique (600, 601), les au moins deux parties (30, 32) du boîtier étant liées en permanence ensemble par deux couches de matière plastique sacrifiées lors d'un processus de soudage sur plaque chauffante, les au moins deux parties (30, 32) du boîtier étant liées pour contenir et pour porter le moyen de mesure, dans lequel ledit boîtier repose sur chaque partie (402, 404) dudit logement (12) du moyen de mesure pour sceller lesdites au moins deux parties (402, 404) dudit logement (12) ensemble, ce qui forme une voie d'écoulement scellable de l'entrée (11) à la sortie (13) du débitmètre à travers le moyen de mesure.

2. Débitmètre selon l'une quelconque des revendications précédentes, dans lequel lesdites au moins deux parties de boîtier externe (30, 32) sont liées en permanence ou raccordées ensemble autour de leurs bords.

3. Débitmètre selon l'une quelconque des revendications précédentes, dans lequel une partie de boîtier externe (30) susmentionnée est un récipient de réception du moyen de mesure et une seconde partie de boîtier externe (32) susmentionnée ferme le récipient pour former une cuve scellable.

4. Débitmètre selon l'une quelconque des revendications précédentes, dans lequel les parties de boîtier (30, 32) liées ou raccordées ensemble positionnent le moyen de mesure à l'intérieur du boîtier.

5. Débitmètre selon l'une quelconque des revendications précédentes, dans lequel la liaison ou le raccordement est formé du même matériau que ledit boîtier externe.

6. Débitmètre selon l'une quelconque des revendications précédentes, dans lequel les au moins deux parties de boîtier externe (30, 32) sont soudées ensemble.

7. Débitmètre selon l'une quelconque des revendications précédentes, dans lequel le matériau dans la zone de la liaison ou du raccordement s'étend jusque dans une cavité dans la au moins une partie de boîtier externe (30, 32).

8. Procédé de fabrication d'un débitmètre selon toute revendication précédente, comprenant :
la compression des parties de boîtier externe ensemble afin que le boîtier externe repose sur chaque partie du logement et lie en permanence lesdites au moins deux parties du boîtier externe, à la fois pour contenir ledit logement et pour sceller lesdites au moins deux parties du logement ensemble.
